# EUROPEAN PATENT APPLICATION

(11) **EP 3 680 979 A1**
(43) Date of publication of application: **15.07.2020**
(21) Application number: 18872969.3
(22) Date of filing: 05.10.2018
(51) Int. Cl.: H01M 10/12, H01M 2/02, H01M 2/18

(54) **LEAD STORAGE BATTERY FOR START-STOP SYSTEM**

(30) Priority: 31.10.2017 JP 2017211362
(71) Applicant: GS Yuasa International Ltd., Kyoto-shi, Kyoto 601-8520 (JP)
(72) Inventor: WADA, Hidetoshi, Kyoto-shi Kyoto 601-8520 (JP); INAGAKI, Satoshi, Kyoto-shi Kyoto 601-8520 (JP); KYO, Masaaki, Kyoto-shi Kyoto 601-8520 (JP)
(74) Representative: Isarpatent
(86) International application number: PCT/JP2018/037303
(87) International publication number: WO 2019/087684

(57) **Abstract**

A lead-acid battery for idling stop includes a cell chamber, and an electrode group and an electrolyte solution stored in the cell chamber. The electrode group includes a positive electrode plate, a negative electrode plate, and a separator interposed between the positive electrode plate and the negative electrode plate. The separator includes a first rib facing the positive electrode plate and a second rib facing the negative electrode plate. The difference D between the inner dimension of the cell chamber and the thickness of the electrode group is more than 0.4 mm and less than 3.5 mm. The inner dimension of the cell chamber is a distance between a pair of inner walls each facing the positive electrode plate or the negative electrode plate in the cell chamber.

## Description

### TECHNICAL FIELD

The present invention relates to a lead-acid battery for idling stop.

### BACKGROUND ART

Lead-acid batteries are being used for various uses in addition to in-vehicle and industrial use. The lead-acid battery includes an electrode group provided with a negative electrode plate, a positive electrode plate, a separator interposed between the negative electrode plate and the positive electrode plate, and an electrolyte solution. The electrode group and the electrolyte solution are stored in a cell chamber in a container of the lead-acid battery.

A separator having a rib may be used as the separator. Patent Literature 1 proposes a separator for a flooded-type lead-acid battery including a main rib and a mini rib formed on a surface opposite to the main rib.

Meanwhile, Patent Document 2 describes that in a valve regulated lead-acid battery, a value obtained by subtracting an electrode group thickness t from a cell inner dimension d may be set to -2.0 mm to +5.0 mm, from the viewpoint of preventing dendritic short circuit during overdischarge.

### PRIOR ART DOCUMENTS

### PATENT DOCUMENTS

Patent Document 1: JP-A-2015-216125
Patent Document 2: JP-A-2008-186654

### SUMMARY OF THE INVENTION

### PROBLEMS TO BE SOLVED BY THE INVENTION

The lead-acid battery is sometimes used in a poor charged state called a partial state of charge (PSOC). For example, in an idling stop (IS) vehicle, a lead-acid battery is used in the PSOC. When charge and discharge are repeated under PSOC conditions, the breakage of the separator may be broken, and a short circuit may easily occur.

### MEANS FOR SOLVING THE PROBLEMS

One aspect of the present invention relates to a lead-acid battery for idling stop, including: a cell chamber; and an electrode group and an electrolyte solution stored in the cell chamber. The electrode group includes a positive electrode plate, a negative electrode plate, and a separator interposed between the positive electrode plate and the negative electrode plate. The separator includes a first rib facing the positive electrode plate and a second rib facing the negative electrode plate. A difference D between an inner dimension of the cell chamber and a thickness of the electrode group is more than 0.4 mm and less than 3.5 mm. The inner dimension of the cell chamber is a distance between a pair of inner walls each facing the positive electrode plate or the negative electrode plate in the cell chamber.

### ADVANTAGES OF THE INVENTION

In the lead-acid battery for idling stop, the breakage of the separator can be decreased.

### BRIEF DESCRIPTION OF THE DRAWINGS

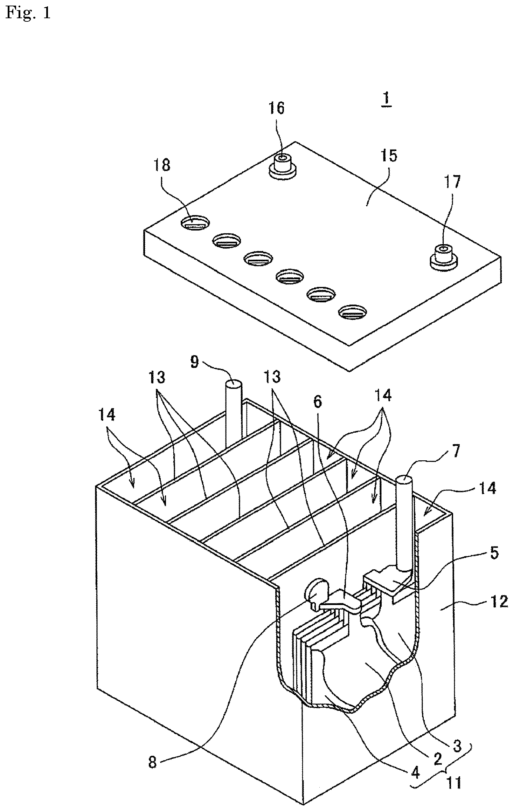

Fig. 1 is an exploded perspective view showing an external appearance and an internal structure of a lead-acid battery, which is partially cut off, according to one aspect of the present invention.

### MODES FOR CARRYING OUT THE INVENTION

A lead-acid battery for idling stop (IS) according to one aspect of the present invention includes a cell chamber, and an electrode group and an electrolyte solution stored in the cell chamber. The electrode group includes a positive electrode plate, a negative electrode plate, and a separator interposed between the positive electrode plate and the negative electrode plate. The separator includes a first rib facing the positive electrode plate and a second rib facing the negative electrode plate. A difference D between an inner dimension of the cell chamber and a thickness of the electrode group is more than 0.4 mm and less than 3.5 mm. Here, the inner dimension of the cell chamber is a distance between a pair of inner walls each facing the positive electrode plate or the negative electrode plate in the cell chamber.

In the positive electrode plate of the lead-acid battery, lead sulfate is generated from lead dioxide during discharge, and a reaction reversed thereto occurs during charge. The generation of lead sulfate during discharge increases the volume expansion of the positive electrode plate. In particular, when charge and discharge are performed under PSOC conditions, lead sulfate easily accumulates, and the volume expansion of the positive electrode plate tends to become remarkable. In the lead-acid battery, a lug for current collection is normally formed on the upper part of the positive electrode plate or the negative electrode plate, and the lug is fixed. Thus, when the volume of the positive electrode plate expands, the volume extends in the thickness direction of the positive electrode plate, and the positive electrode plate easily is curved in the thickness direction. When the positive electrode plate is curved in the thickness direction, the separator is pressed by the positive electrode plate having high oxidizability, so that the separator is easily oxidized and degraded, and the breakage of the separator easily occurs. When the separator breaks, a short circuit occurs. From the viewpoint of preventing the oxidation degradation of the separator, it is conceivable to increase the thickness of the separator or to provide a rib on the positive electrode plate side of the separator to increase the height of the rib. However, in these cases, the resistance of the separator increases, and the discharge performance and charge acceptability deteriorate.

On the other hand, a rib may be provided not only on the positive electrode plate side of the separator but also on the negative electrode plate side. When the ribs are provided on both surfaces of the separator as described above, it is possible to prevent a permeation short circuit. However, when the rib is provided on the negative electrode plate side, the height of the ribs on the positive electrode plate side needs to be relatively decreased, thereby facilitating the oxidation degradation of the separator and the breakage of the separator.

According to the above aspect of the present invention, in the lead-acid battery for IS, the difference D between the inner dimension of the cell chamber and the thickness of the electrode group is set to 0.4 mm <D <3.5 mm. It is thereby possible to effectively prevent the curvature of the positive electrode plate, and to prevent the oxidation degradation of the separator due to the positive electrode plate despite the use of the separator having the ribs (the first rib and the second rib) on both surfaces. Therefore, when charge and discharge are performed under PSOC conditions in which the curvature of the positive electrode plate tends to become remarkable, the breakage of the separator can be decreased. Therefore, the occurrence of a short circuit due to the separator breakage can be prevented. Further, by preventing the deterioration of the separator, high PSOC life performance can be ensured. When the difference D is 0.4 or less, even slight curvature makes the oxidation degradation remarkable due to the contact of the positive electrode plate with the separator, thereby increasing the possibility of the breakage short circuit. When the difference D is 3.5 or more, the curvature of the positive electrode plate becomes excessively large, and the end of the electrode plate becomes convex to increase the possibility of contact with the base of the separator, thus increasing the possibility that the breakage short circuit of the separator occurs.

The difference D is a value obtained by subtracting a thickness T of the electrode group from an inner dimension W of the cell chamber (= W-T).

The cell chamber has a pair of inner walls each facing the electrode plate (positive electrode plate or negative electrode plate) located on each outer side of the electrode plates included in the electrode group, and a pair of inner walls each facing the side ends of the electrode plates included in the electrode group. The electrode group is stored in the cell chamber in the state of being surrounded by these inner walls. The inner dimension W of the cell chamber is a distance between the pair of inner walls each facing the electrode plate (positive electrode plate or negative electrode plate) located on each outer side of the electrode group. For example, when the container has a plurality of cell chambers separated by partition walls, a pair of adjacent partition walls is regarded as a pair of side walls of the cell chamber each facing the electrode plate, and a distance between the partition walls (specifically, a space between the wall surfaces of the partitions facing each other) is defined as the inner dimension W of the cell chamber. Note that there are cases where a rib (also called a container rib) is provided on the inner wall of the cell chamber. When the ribs are provided on the inner walls facing the electrode plate of the cell chamber, the heights of the ribs on the pair of inner walls are added up, and a value obtained by subtracting the total value from the distance between the inner walls is defined as the inner dimension W of the cell chamber.

When the lead-acid battery includes no cell chamber and the electrode group is stored in the container, the container is defined as the cell chamber, and the inner dimension of the container, that is, the distance between the inner walls of the container each facing the positive electrode plate or the negative electrode plate of the electrode group (specifically, the electrode plates located on both outer sides of the electrode group) is defined as the inner dimension W of the cell chamber.

When there is variation in the inner dimensions of the cell chamber, including when the container has a taper, the minimum value of the inner dimensions is defined as the inner dimension W at the time of calculating the difference D.

The thickness T of the electrode group is obtained as follows. First, an electrode group is taken out of a chemically converted, fully charged lead-acid battery, and disassembled into a positive electrode plate, a negative electrode plate and a separator. Next, the thicknesses of the positive electrode plate, the negative electrode plate, and the thickness of the separator are each measured and added up in the laminating direction to obtain the thickness T of the electrode group. Here, each of the thicknesses of the positive electrode plate and the negative electrode plate is an average value of values measured at arbitrary five locations in a region where each electrode material is present. The thickness of the separator is an average value of values measured at any five locations in a region facing the region where the electrode material of each of the positive electrode plate and the negative electrode plate is present. The thickness (average value) of the separator is a total thickness (average value) including the first rib and the second rib. The separator normally includes a sheet-like base, a first rib protruding from one main surface of the base, and a second rib protruding from the other main surface. Therefore, the thickness of the base, the height of the first rib, and the height of the second rib may each be measured, and the sum of the measured values may be defined as the thickness of the separator. The respective height directions of the first rib and the second rib are directions along the thickness direction of the base (i.e., directions orthogonal to the surface direction of the base), and by adding up these, the total thickness of the separator is obtained.

The average thickness of the base is obtained by measuring the thickness of the base at five freely selected locations in a cross-sectional photograph of the separator and averaging the measured thickness.

The height of the first rib refers to the maximum height of the first rib present in the region of the separator facing the region of the positive electrode plate where the positive electrode material is present. The height of each first rib is a distance from one main surface of the base to the top of the first rib. In a case where the main surface of the base is not flat, when the separator is placed flat with the first rib side facing up, the distance from the highest position of one main surface of the base to the highest position of the top of the first rib at a predetermined position of the first rib, as viewed from the lateral side, is defined as the height of the first rib.

According to the case of the first rib, the height of the second rib refers to the maximum height of the second rib present in the region of the separator facing the region of the negative electrode plate where the negative electrode material is present. The height of each second rib is the distance from the other main surface of the base to the top of the second rib. The height of the second rib is obtained according to the case of the first rib.

Note that there are cases where a rib (container rib) is formed on the inner walls of the cell chamber, a separator is present between the electrode plate on each outer side of the electrode group and the inner wall of the cell chamber facing this electrode plate, and a rib is also formed on the main surface of the separator on the inner wall side of the cell chamber. When the electrode group is stored in the cell chamber, in a case where the rib of the separator on the inner wall side does not overlap with the rib on the facing inner wall (i.e., in a case where the rib of the separator having entered between the adjacent container ribs), for the separator facing the inner wall, the value obtained by subtracting the height of the rib of the separator on the inner wall side from the total thickness of the separator is defined as the thickness of the separator. The height of the rib of the separator is normally smaller than the height of the container rib.

The average thickness of the base and the height of the rib are obtained for a separator having been taken out from a chemically converted, fully charged lead-acid battery, and washed and vacuum-dried (dried at a pressure lower than atmospheric pressure), as described below.

In the present specification, the fully charged state of the lead-acid battery is a state where in a water bath at 25°C, the constant current charge is performed at a current of 0.2 CA to reach 2.5 V/cell, and then, the constant current charge is further performed at 0.2 CA for two hours.

In the present specification, 1 CA is a current value (A) having the same numerical value as the nominal capacity (Ah) of the battery. For example, when the battery has a nominal capacity of 30 Ah, 1 CA is 30 A, and 1 mCA is 30 mA.

The lead-acid battery for IS according to the above aspect of the present invention is a flooded-type lead-acid battery. The lead-acid battery for IS is a lead-acid battery that is assumed to be repeatedly used in PSOC (i.e., a state of charge (SOC) of less than 100%). Since the lead-acid battery for IS has a higher utilization factor of the electrolyte solution than general lead-acid batteries for engine start-up, backup, and the like, the use of the lead-acid battery for IS can also be distinguished by the utilization factor of the electrolyte solution from lead-acid batteries in other uses (e.g., a lead-acid battery assumed to be repeatedly charged until being fully charged (a lead-acid battery for starting an engine, etc.)). The utilization factor of the electrolyte solution of the lead-acid battery for IS according to the above aspect is, for example, 70% or more and 90% or less, and preferably 75% or more and 90% or less. When the utilization factor of the electrolyte solution is in such a range, the amount of the electrode material for maintaining the PSOC life high can be ensured sufficiently. In contrast, lead-acid batteries for other uses (particularly, the lead-acid battery assumed to be repeatedly charged until being fully charged) are normally used with a utilization factor of the electrolyte solution being less than 70%. The charge-discharge balance of the lead-acid battery for IS may temporarily become 100% or more due to recovery charge, but normally, the charge and discharge at a SOC of less than 100% is repeated. The lead-acid battery for IS is preferably used at a SOC of 85% or more and less than 100%, and may be used at a SOC of less than 85%. Note that a fully charged lead-acid battery is assumed to have a SOC of 100%.

The utilization factor of the electrolyte solution means a value (%) calculated by obtaining a theoretical solution capacity (amount of sulfate radical (g)/3.657) from the amount of the electrolyte solution in a single cell and the amount of the sulfate radical calculated from the concentration of sulfuric acid, and dividing an effective 20-hour rate capacity by the obtained theoretical solution capacity. The effective 20-hour rate capacity means a value measured by replacing a five-hour rate current I₅ in a five-hour rate capacity test specified in Japanese Industrial Standard (JIS) D 5301:2006 with a 20-hour rate current I₂₀ and performing the test. The utilization factor of the electrolyte solution and the effective 20-hour rate capacity are values obtained from a battery fully charged by the low-current charging method 1 or 2 specified in JIS D 5301:2006.

Another aspect of the present invention also includes a method of using the above lead-acid battery for IS in PSOC (i.e., a state of charge of less than 100%). The utilization factor of the electrolyte solution at this time is preferably 70% or more and 90% or less, and more preferably 75% or more and 90% or less. The lead-acid battery for IS is preferably used at a SOC of 85% or more and less than 100%, and may be used at a SOC of less than 85%.

Still another aspect of the present invention also includes a charge-discharge system provided with the above lead-acid battery for IS and a control unit connected to the lead-acid battery for IS and controlling the charge and discharge of the lead-acid battery for IS. The control unit includes a charge control unit for controlling conditions (e.g., current, voltage, etc.) at the time of charging the lead-acid battery for IS, and a discharge control unit for controlling conditions (e.g., current, voltage, etc.) at the time of discharging the lead-acid battery for IS. The charge control unit controls the lead-acid battery for IS so as to be charged to a SOC of less than 100%. An idling stop vehicle is connected to the lead-acid battery for IS as a load device that consumes power supplied from the lead-acid battery for IS at the time of idling stop. The lead-acid battery for IS is preferably controlled so as to be charged to a SOC of 85% or more and less than 100%, and may be controlled so as to be charged to a SOC of less than 85%.

In the lead-acid battery for IS, the difference D between the inner dimension of the cell chamber and the thickness of the electrode group is preferably 0.5 mm or more and 3.0 mm or less. In this case, the effect of decreasing the breakage of the separator can be further enhanced.

The height of the first rib is preferably 0.3 mm or more. In this case, the occurrence rate of the separator breakage can be further decreased, and the life performance in a cycle test under PSOC conditions (hereinafter referred to as PSOC life performance) can be improved. In a lead-acid battery, when the charge and discharge are repeated under PSOC conditions, stratification occurs in which the concentration of the electrolyte solution is lower in the upper part of the container and is higher in the lower part of the container. As the stratification progresses, the charge-discharge reaction varies, and the battery life is shortened. It is conceivable that the PSOC life performance is improved by setting the height of the first rib to 0.3 mm or more because, by providing the second rib in addition to providing the first rib with such a height on the separator, the electrolyte solution is easily ensured near the positive electrode plate and the negative electrode plate, so that the diffusivity of the electrolyte solution is improved, and hence the stratification is prevented.

The height of the second rib is preferably 0.05 mm or more and 0.2 mm or less. When the height of the second rib is in such a range, the second rib facilitates ensuring the electrolyte solution near the negative electrode plate. In addition, the first rib having a certain height can be provided to facilitate ensuring the electrolyte solution near the positive electrode plate. Therefore, the stratification is prevented by improving the diffusivity of the electrolyte solution, so that the PSOC life performance can be improved.

The separator may have a bag shape. When the bag-shaped separator is used, the electrolyte solution tends to stay. However, by setting 0.4 mm <D <3.5 mm and providing ribs inside and outside the bag-shaped separator, the diffusivity of the electrolyte solution is enhanced, and the PSOC life performance can be further improved. When the negative electrode plate is stored in the bag-shaped separator, the influence of the curvature is hardly exerted, so that the occurrence rate of the separator breakage can be further decreased. When the positive electrode plate is stored in the bag-shaped separator, the effect of improving the diffusivity of the electrolyte solution on the positive electrode side is easily exerted, so that the PSOC life performance is further improved.

Hereinafter, a lead-acid battery for IS according to an embodiment of the present invention will be described for each of the main components, but the present invention is not limited to the following embodiment.

### (Container)

The lead-acid battery for IS is provided with a container, and the container is normally divided into a plurality of cell chambers by partition walls. The electrode group and the electrolyte solution are stored into the cell chamber. Normally, one electrode group is stored into one cell chamber. The container is formed using a resin material having high resistance to sulfuric acid (e.g., polypropylene, acrylonitrile butadiene styrene copolymer, etc.).

In the above aspect of the present invention, by setting the difference D between the inner dimension of the cell chamber and the thickness of the electrode group to 0.4 mm <D <3.5 mm, the breakage of the separator can be prevented as described above. From the viewpoint of further enhancing the effect of preventing the breakage of the separator, the difference D is preferable set to 0.5 mm ≤ D ≤ 3.0 mm.

The difference D can be adjusted by adjusting, for example, the inner dimension W of the cell chamber, the thickness of the positive electrode plate, the thickness of the negative electrode plate, the thickness of the base of the separator, the height of the first rib, and/or the height of the second rib. The inner dimension of the cell chamber can be adjusted by, for example, providing a container rib on the inner wall of the cell chamber or adjusting the height of the container rib.

### (Electrode group)

The electrode group includes a positive electrode plate, a negative electrode plate, and a separator interposed therebetween.

Hereinafter, the configuration of the electrode group will be described more specifically.

### (Separator)

The separator includes a base made of a microporous film, a rib protruding from one main surface of the base, and a rib protruding from the other main surface of the base. The separator is arranged such that a rib protruding from one main surface is located on the positive electrode plate side, and a rib protruding from the other main surface is located on the negative electrode plate side. The rib located on the positive electrode plate side is called a first rib, and the rib located on the negative electrode plate side is called a second rib. When the second rib is provided on the separator, the height of the first rib needs to be relatively decreased, so that the separator is easily oxidized and degraded. However, by setting 0.4 mm <D <3.5 mm, the oxidation degradation of the separator can be prevented to decrease the breakage of the separator. In addition, the first rib can enhance the diffusivity of the electrolyte solution near the positive electrode plate, and the second rib can enhance the diffusivity of the electrolyte solution near the negative electrode plate. This facilitates ensuring high PSOC life performance.

The separator is formed using a polymer material (but different from fibers). At least the base is a porous sheet and can also be called a porous film. The separator may include a filler (e.g., a particulate filler such as silica, and/or a fibrous filler) that is dispersed in a matrix formed using a polymer material. The separator is preferably made of a polymer material having acid resistance. As such a polymer material, a polyolefin such as polyethylene or polypropylene is preferred.

The average thickness of the base is, for example, 100 µm or more and 300 pm or less, and preferably 150 pm or more and 250 pm or less. When the average thickness of the base is in such a range, the heights of the first rib and the second rib are easily ensured while high charge-discharge characteristics are ensured.

The first rib is formed on the surface of the separator facing the positive electrode plate. The height of the first rib is, for example, 0.25 mm or more. When the height of the first rib is in such a range, the oxidation degradation of the separator is easily prevented. The height of the first rib is preferably 0.3 mm or more (or 0.30 mm or more). In this case, the occurrence rate of the separator breakage can be further improved, and the PSOC life performance can be improved. From the viewpoint of ensuring high charge-discharge characteristics, the height of the first rib is, for example, 1.0 mm or less, and preferably 0.7 mm or less. Any combination of these lower and upper limits is possible.

The pattern of the first rib on one main surface of the base is not particularly limited, and the first rib may be formed at random or may be formed in a stripe shape, a curved shape, a grid shape, or the like. From the viewpoint of making the electrolyte solution more easily diffused, it is preferable to form a plurality of first ribs on one main surface of the base so as to be arranged in stripes. The orientation of the stripe-shaped first ribs is not particularly limited, and for example, the plurality of first ribs may be formed along the height direction or the width direction of the negative electrode plate.

Note that a lug for extracting current from the electrode group is usually formed at one end of each of the negative electrode plate and the positive electrode plate. The vertical direction of the negative electrode plate or the positive electrode plate with the lug directed upward is referred to as the height direction of the negative electrode plate or the positive electrode plate. The width direction of the negative electrode plate or the positive electrode plate is a direction orthogonal to the height direction and crossing the main surface of the negative electrode plate or the positive electrode plate.

The average pitch of the striped or grid-shaped first ribs is, for example, 1 mm or more and 15 mm or less, and preferably 5 mm or more and 10 mm or less. When the separator includes a region where the first ribs are formed at an average pitch in such a range, the effect of preventing the oxidation degradation of the separator is further enhanced. The separator is preferably formed with the first ribs at such an average pitch in a region facing the positive electrode plate (preferably, a region where the positive electrode material is present). For example, the first ribs having such an average pitch are preferably formed in 70% or more of the area of the region of the separator facing the positive electrode plate. In a region not facing the positive electrode plate or a region facing a region where the positive electrode material of the positive electrode plate is not present, such as the end of the separator, the first rib may or may not be formed, and a plurality of first ribs may be formed densely (e.g., at an average pitch of 0.5 mm or more and 5 mm or less).

Note that the pitch of the first ribs is the distance between the tops of the adjacent first ribs (more specifically, the distance between the centers of the adjacent first ribs in a direction crossing the first ribs).

The average pitch of the first ribs is obtained by averaging the pitches of the first ribs measured at ten freely selected locations. When the first ribs are densely formed in the region of the separator not facing the positive electrode plate or the region facing a region where the positive electrode material of the positive electrode plate is not present, the average pitch may be calculated excluding this region. The average pitch of such partially densely formed first ribs can be calculated for this region, similarly to the above.

The second rib is formed on the surface of the separator facing the negative electrode plate. The height of the second rib is preferably 0.05 mm or more, for example. When the height of the second rib is in such a range, the electrolyte solution is more easily diffused near the negative electrode plate. The height of the second rib is, for example, preferably 0.50 mm or less from the viewpoint of ensuring high charge-discharge characteristics, and is preferably 0.40 mm or less from the viewpoint of easily ensuring the height of the first rib. Further, when the height of the second rib is 0.20 mm or less, excellent PSOC life performance is easily obtained.

The pattern and the orientation of the second rib are not particularly limited and may be selected, for example, from those described for the first rib. The average pitch of the striped or grid-shaped second ribs is, for example, 0.3 mm or more and 10 mm or less, and preferably 0.5 mm or more and 5 mm or less. When the average pitch of the second ribs is in such a range, the effect of improving the diffusivity of the electrolyte solution near the negative electrode plate is easily obtained. In the separator, the second ribs are preferably formed at such an average pitch in a region facing the negative electrode plate (preferably, a region facing a region where the negative electrode material is present). For example, the second ribs having such an average pitch are preferably formed in 70% or more of the area of the region of the separator facing the negative electrode plate. In a region not facing the negative electrode plate or a region facing a region where the negative electrode material of the negative electrode plate is not present, such as the end of the separator, the second rib may or may not be formed, and a plurality of second ribs may be formed densely (e.g., at an average pitch of 0.5 mm or more and 5 mm or less).

Note that the pitch of the second rib is the distance between the tops of the adjacent second ribs (more specifically, the distance between the centers of the adjacent second ribs in a direction crossing the second rib). The average pitch of the second rib can be calculated according to the average pitch of the first rib.

Similarly to the above, the average pitches of the first rib and the second rib are to be obtained for a separator having been taken out from a chemically converted, fully charged lead-acid battery, and washed and vacuum-dried (dried at a pressure lower than atmospheric pressure).

The sheet-shaped separator may be sandwiched between the negative electrode plate and the positive electrode plate, or by storing the negative electrode plate or the positive electrode plate in the bag-like separator, the separator may be interposed between the negative electrode plate and the positive electrode plate. When the bag-shaped separator is used, the electrolyte solution is hardly diffused, but by providing the first rib and the second rib, the diffusivity is improved. When the negative electrode plate is stored in the bag-shaped separator, the occurrence rate of the separator breakage can be further decreased. When the positive electrode plate is stored in the bag-shaped separator, the PSOC life performance can be further improved.

The separator is obtained by, for example, extruding a resin composition containing a pore-forming additive (a solid pore-forming additive such as a polymer powder, and/or a liquid pore-forming additive such as an oil), a polymer material, and the like to be molded into a sheet shape, and then removing the pore-forming additive to form pores in the matrix of the polymer material. The rib may be formed, for example, at the time of the extrusion molding, or may be formed by performing the press with a roller having a groove corresponding to the rib after the molding into the sheet shape or the removal of the pore-forming additive. When a filler is used, the filler is preferably added to the resin composition.

### (Positive electrode plate)

There are a paste type and a clad type in the positive electrode plate of the lead-acid battery.

The paste-type positive electrode plate includes a positive electrode current collector and a positive electrode material. The positive electrode material is held in the positive electrode current collector. In the paste-type positive electrode plate, the positive electrode material is a material with the positive electrode current collector removed from the positive electrode plate. The positive electrode current collector may be formed similarly to the negative electrode current collector, and can be formed by casting lead or a lead alloy or processing a lead or lead alloy sheet.

The clad-type positive electrode plate includes a plurality of porous tubes, a spine inserted into each tube, a positive electrode material with which a spine inserted tube is filled, and a joint that joins the plurality of tubes. In the clad-type positive electrode plate, the positive electrode material is a material with the tube, the spine, and the joint removed from the positive electrode plate.

As a lead alloy used for the positive electrode current collector, a Pb-Ca-based alloy and a Pb-Ca-Sn-based alloy are preferred in terms of corrosion resistance and mechanical strength. The positive electrode current collector may have a lead alloy layer with a different composition, and a plurality of alloy layers may be provided. It is preferable to use a Pb-Ca-based alloy or a Pb-Sb-based alloy for the spine.

The positive electrode material contains a positive active material (lead dioxide or lead sulfate) that develops a capacity through an oxidation-reduction reaction. The positive electrode material may contain other additives if necessary.

A non-chemically converted paste-type positive electrode plate is obtained in such a manner that a positive electrode current collector is filled with a positive electrode paste, which is then cured and dried, according to the case of the negative electrode plate. Thereafter, a non-chemically converted positive electrode plate is chemically converted. The positive electrode paste is prepared by kneading lead powder, an additive, water, and sulfuric acid.

A clad-type positive electrode plate is formed by filling a spine inserted tube with lead powder or slurry-like lead powder, and joining a plurality of tubes with a joint.

### (Negative electrode plate)

The negative electrode plate of the lead-acid battery is made up of a negative electrode current collector and a negative electrode material. The negative electrode material is a material obtained with the negative electrode current collector removed from the negative electrode plate. The negative electrode current collector may be formed by casting lead (Pb) or a lead alloy or may be formed by processing a lead or lead alloy sheet. Examples of the processing method include an expanding process and a punching process. The use of a negative electrode grid as the negative electrode current collector is preferred because the negative electrode material is easily supported.

The lead alloy used for the negative electrode current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative electrode material contains a negative active material (lead or lead sulfate) that develops a capacity through an oxidation-reduction reaction. The negative electrode material may contain an expander, a carbonaceous material such as carbon black, barium sulfate, or the like, and may contain other additives.

The negative active material in a charged state is spongy lead, whereas a non-chemically converted negative electrode plate is usually produced using lead powder.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to the lead powder, the organic expander, and various additives if necessary, and mixing these. In the curing step, it is preferable to cure the non-chemically converted negative electrode plate at a temperature higher than room temperature and with high humidity.

The chemical conversion can be performed by charging the electrode group in a state where the electrode group including the non-chemically converted negative electrode plate is immersed in the electrolyte solution containing sulfuric acid in the container of the lead-acid battery. However, the chemical conversion may be performed before the lead-acid battery or the electrode group is assembled. The chemical conversion produces spongy lead.

### (Electrolyte solution)

An aqueous solution containing sulfuric acid is used as the electrolyte solution. The electrolyte solution may be gelled if necessary.

The electrolyte solution may contain an additive used for a lead-acid battery, if necessary. The additives also include, for example, metal salts (sodium salts such as sodium sulfate and aluminum salts such as aluminum sulfate).

The specific gravity at 20°C of the electrolyte solution in a fully charged lead-acid battery after chemical conversion is, for example, 1.10 g/cm³ or more and 1.35 g/cm³ or less.

Fig. 1 shows an external view of an example of a lead-acid battery for IS according to an embodiment of the present invention.

The lead-acid battery 1 for IS includes a container 12 storing an electrode group 11 and an electrolyte solution (not shown). The inside of the container 12 is partitioned into a plurality of cell chambers 14 by partitions 13. In each cell chamber 14, one electrode group 11 is stored. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed, and a water addition liquid is supplied. The vent plug 18 may have a function of discharging gas generated in the cell chamber 14 to the outside of the battery.

The electrode group 11 is configured by laminating a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, the negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode groups 11 of the adjacent cell chambers 14 in series.

The positive electrode shelf 5 is formed by welding lugs provided on the upper parts of the respective positive electrode plates 3 by a cast-on-strap method or a burning method. The negative electrode shelf 6 is also formed by welding lugs provided on the upper parts of the respective negative electrode plates 2, according to the case of the positive electrode shelf 5.

### [Example]

Hereinafter, the present invention will be specifically described based on examples and comparative examples, but the present invention is not limited to the following examples.

### <<IS lead-acid batteries A1-1 to A1-3, A2-1 to A2-3, A3-1 to A3-3, B1-1 to B1-3, and B2-1 to B2-3>>

### (1) Preparation of negative electrode plate

A negative electrode paste was obtained by mixing lead powder, water, diluted sulfuric acid, carbon black, and an organic expander. A mesh of an expanded grid made of a Pb-Ca-Sn-based alloy as a negative electrode current collector was filled with the negative electrode paste, which was then cured and dried to obtain a non-chemically converted negative electrode plate. Sodium lignin sulfonate was used as the organic expander. The additive amounts of the carbon black and the organic expander were adjusted so that the contents thereof contained in 100% by mass of the negative electrode material were 0.3% by mass and 0.2% by mass, respectively. The carbon black and the organic expander were then mixed into the negative electrode paste.

### (2) Preparation of positive electrode plate

A positive electrode paste was prepared by mixing lead powder, water, and sulfuric acid. A mesh of an expanded grid made of a Pb-Ca-Sn-based alloy as a positive electrode current collector was filled with the positive electrode paste, which was then cured and dried to obtain a non-chemically converted positive electrode plate.

### (3) Production of lead-acid battery for IS

Each non-chemically converted negative electrode plate was stored into a bag-shaped separator formed using a polyethylene microporous film, and an electrode group was formed using six non-chemically converted negative electrode plates and six non-chemically converted positive electrode plates per cell. The separator has a first rib outside the bag and a second rib inside the bag. The separator includes a plurality of striped first ribs and a plurality of second ribs, and the plurality of first ribs and the plurality of second ribs were formed along the height directions of the positive electrode plate and the negative electrode plate, respectively. The heights of the first rib and the second rib were set as shown in Table 1, and the average thickness of the base of the separator was set to 0.2 mm. The total thickness of the separator, which corresponds to the sum of the heights of the first rib and the second rib and the total of the average thicknesses of the base, is 0.7 mm. The average pitch of the first ribs in the region facing the positive electrode plate was 10 mm, and the average pitch of the second ribs in the region facing the negative electrode plate was 1 mm. The heights of the ribs of the separator, the average thickness of the base, and the average pitch of the ribs are values obtained for the separator before the preparation of the lead-acid battery. However, those values are almost the same as values obtained by measurement preformed for the separator taken out from the produced lead-acid battery in the procedure described above.

The electrode group was inserted into a container made of polypropylene, the container was filled with an electrolyte solution, and chemical conversion was performed in the container, to assemble flooded-type IS lead-acid batteries A1-1 to A1-3, A2-1 to A2-3, A3-1 to A3-3, B1-1 to B1-3, and B2-1 to B2-3 each having a nominal voltage of 12 V and a nominal capacity of 30 Ah (five-hour rate). A sulfuric acid aqueous solution having a specific gravity of 1.28 at 20°C was used as the electrolyte solution. In order that the difference D obtained by the procedure described above becomes the value in Table 1, the inner dimension W of the cell chamber was adjusted by providing a container rib on the inner wall of the cell chamber for each lead-acid battery, or the height of the first rib and/or the height of the second rib were adjusted.

The utilization factor of the electrolyte solution of the lead-acid battery was set to 80%.

### <<IS lead-acid batteries A4-1 to A4-3, A5-1 to A5-3, B3-1 to B3-3, and B4-1 to B4-3>>

The heights of the first rib and the second rib and the difference D were set to the values shown in Table 2, and the total thickness of the separator was set to 0.6 mm. Except for these, similarly to the IS lead-acid battery A1-1, IS lead-acid batteries A4-1 to A4-3, A5-1 to A5-3, B3-1 to B3-3, and B4-1 to B4-3 were produced. The difference D was adjusted by providing a container rib on the inner wall of the cell chamber to adjust the inner dimension W of the cell chamber, or adjusting the height of the first rib and/or the height of the second rib.

### <<IS lead-acid batteries A6-1 to A6-3, A7-1 to A7-3, B5-1 to B5-3, and B6-1 to B6-3>>

The heights of the first rib and the second rib and the difference D were set to the values shown in Table 3, and the total thickness of the separator was set to 0.8 mm. Except for these, similarly to the IS lead-acid battery A1-1, IS lead-acid batteries A6-1 to A6-3, A7-1 to A7-3, B5-1 to B5-3, and B6-1 to B6-3 were produced. The difference D was adjusted by providing a container rib on the inner wall of the cell chamber to adjust the inner dimension W of the cell chamber, or adjusting the height of the first rib and/or the height of the second rib.

### <<IS lead-acid batteries A8-1 to A8-4, A9-1 to A9-4, B7-1 to B7-4, and B8-1 to B8-4>>

The heights of the first rib and the second rib and the difference D were set to the values shown in Table 4, and the total thickness of the separator was 0.9 mm. Except for these, similarly to the IS lead-acid battery A1-1, IS lead-acid batteries A8-1 to A8-4, A9-1 to A9-4, B7-1 to B7-4, and B8-1 to B8-4 were produced. The difference D was adjusted by providing a container rib on the inner wall of the cell chamber to adjust the inner dimension W of the cell chamber, or adjusting the height of the first rib and/or the height of the second rib.

### <<IS lead-acid batteries A10-1 to A10-3, A11-1 to A11-3, B9-1 to B9-3, and B10-1 to B10-3>>

Each non-chemically converted positive electrode plate was stored in a bag-shaped separator. The separator has a first rib inside the bag and a second rib outside the bag. The heights of the first rib and the second rib and the difference D were set to the values shown in Table 5. Except for these, similarly to the IS lead-acid battery A1-1, IS lead-acid batteries A10-1 to A10-3, A11-1 to A11-3, B9-1 to B9-3, and B10-1 to B10-3 were produced. The difference D was adjusted by providing a container rib on the inner wall of the cell chamber to adjust the inner dimension W of the cell chamber, or adjusting the height of the first rib and/or the height of the second rib.

### <<IS lead-acid batteries A12-1 to A12-3, A13-1 to A13-3, B11-1 to B11-3, and B12-1 to B12-3>>

The heights of the first rib and the second rib and the difference D were set to the values shown in Table 6, and the total thickness of the separator was set to 0.6 mm. Except for these, similarly to the IS lead-acid battery A10-1, IS lead-acid batteries A12-1 to A12-3, A13-1 to A13-3, B11-1 to B11-3, and B12-1 to B12-3 were produced. The difference D was adjusted by providing a container rib on the inner wall of the cell chamber to adjust the inner dimension W of the cell chamber, or adjusting the height of the first rib and/or the height of the second rib.

### <<IS lead-acid batteries A14-1 to A14-4, A15-1 to A15-4, B13-1 to B13-4, and B14-1 to B14-4>>

The heights of the first rib and the second rib and the difference D were set to the values shown in Table 7, and the total thickness of the separator was 0.9 mm. Except for these, similarly to the IS lead-acid battery A10-1, IS lead-acid batteries A14-1 to A14-4, A15-1 to A15-4, B13-1 to B13-4, and B14-1 to B14-4 were produced. The difference D was adjusted by providing a container rib on the inner wall of the cell chamber to adjust the inner dimension W of the cell chamber, or adjusting the height of the first rib and/or the height of the second rib.

### [Evaluation 1: Separator breakage occurrence rate]

In order to reproduce the curvature of the positive electrode plate under PSOC conditions in a shorter period of time, the test was performed under the condition that the repetition of the expansion and contraction of the positive active material became remarkable. Specifically, the charge and discharge of the lead-acid battery for IS were repeated according to the five-hour rate capacity test specified in JIS D 5301:2006. However, the charge and discharge were started from a fully charged state specified in JIS D 5301:2006, and as a recovery charge condition in the charge-discharge cycle was an originally devised condition. Specifically, with (a) and (b) below defined as one cycle, the occurrence or non-occurrence of the separator breakage was examined at the time when (a) and (b) were repeated 20 cycles. A test was performed with a plurality of batteries, and the ratio of the number of batteries in which the separator breakage had occurred to the total number of batteries was obtained as the occurrence rate (%) of the separator breakage.
(a) Five-hour rate discharge: discharge to a final voltage of 10.5V at 6A.
(b) Recovery charge: charge at 14.8 V for 18 hours (maximum current 50A).

### [Evaluation 2: PSOC life performance]

The lead-acid battery for IS was charged and discharged under the idling stop condition according to SBAS 0101:2014. Specifically, (a) to (c) below were repeated as one cycle at 25°C until the discharge end voltage became 7.2 V or less, and the number of cycles at this time was obtained. The PSOC life performance was evaluated based on the ratio at the time when the number of cycles in the IS lead-acid battery B1-3 was set to 100. At the time of charge and discharge, the operation was suspended for 40 to 48 hours every 3600 cycles.
(a) Discharge 1: discharge is performed at a current value of 32 A for 59 seconds.
(b) Discharge 2: discharge is performed at a current value of 300 A for one second.
(c) Charge: charge is performed at a voltage of 100 A and a voltage of 14.0 V for 60 seconds.

Tables 1 to 7 show the evaluation results.

**[Table 1]**

| | Difference D (mm) | Separator | | | | | Separator breakage occurrence rate (%) | PSOC life performance (%) |
|---|---|---|---|---|---|---|---|---|
| | | Total thickness (mm) | Average thickness of base (mm) | Height of first rib (mm) | Height of second rib (mm) | Pole wrapped | | |
| B1-1 | 0.4 | 0.7 | 0.2 | 0.45 | 0.05 | Negative | 10 | 120 |
| B1-2 | | | | 0.3 | 0.2 | | 10 | 120 |
| B1-3 | | | | 0.25 | 0.25 | | 50 | 100 |
| A1-1 | 0.5 | 0.7 | 0.2 | 0.45 | 0.05 | Negative | 0 | 120 |
| A1-2 | | | | 0.3 | 0.2 | | 0 | 120 |
| A1-3 | | | | 0.25 | 0.25 | | 10 | 100 |
| A2-1 | 1.0 | 0.7 | 0.2 | 0.45 | 0.05 | Negative | 0 | 120 |
| A2-2 | | | | 0.3 | 0.2 | | 0 | 120 |
| A2-3 | | | | 0.25 | 0.25 | | 10 | 100 |
| A3-1 | 3.0 | 0.7 | 0.2 | 0.45 | 0.05 | Negative | 0 | 120 |
| A3-2 | | | | 0.3 | 0.2 | | 0 | 120 |
| A3-3 | | | | 0.25 | 0.25 | | 10 | 100 |
| B2-1 | 3.5 | 0.7 | 0.2 | 0.45 | 0.05 | Negative | 10 | 120 |
| B2-2 | | | | 0.3 | 0.2 | | 10 | 120 |
| B2-3 | | | | 0.25 | 0.25 | | 50 | 105 |

**[Table 2]**

| | Difference D (mm) | Separator | | | | | Separator breakage occurrence rate (%) | PSOC life performance (%) |
|---|---|---|---|---|---|---|---|---|
| | | Total thickness (mm) | Average thickness of base (mm) | Height of first rib (mm) | Height of second rib (mm) | Pole wrapped | | |
| B3-1 | 0.4 | 0.6 | 0.2 | 0.35 | 0.05 | Negative | 10 | 120 |
| B3-2 | | | | 0.3 | 0.1 | | 10 | 120 |
| B3-3 | | | | 0.25 | 0.15 | | 50 | 100 |
| A4-1 | 0.5 | 0.6 | 0.2 | 0.35 | 0.05 | Negative | 0 | 120 |
| A4-2 | | | | 0.3 | 0.1 | | 0 | 120 |
| A4-3 | | | | 0.25 | 0.15 | | 10 | 100 |
| A5-1 | 3.0 | 0.6 | 0.2 | 0.35 | 0.05 | Negative | 0 | 120 |
| A5-2 | | | | 0.3 | 0.1 | | 0 | 120 |
| A5-3 | | | | 0.25 | 0.15 | | 10 | 100 |
| B4-1 | 3.5 | 0.6 | 0.2 | 0.35 | 0.05 | Negative | 10 | 120 |
| B4-2 | | | | 0.3 | 0.1 | | 10 | 120 |
| B4-3 | | | | 0.25 | 0.15 | | 50 | 100 |

**[Table 3]**

| | Difference D (mm) | Separator | | | | | Separator breakage occurrence rate (%) | PSOC life performance (%) |
|---|---|---|---|---|---|---|---|---|
| | | Total thickness (mm) | Average thickness of base (mm) | Height of first rib (mm) | Height of second rib (mm) | Pole wrapped | | |
| B5-1 | 0.4 | 0.8 | 0.2 | 0.55 | 0.05 | Negative | 10 | 120 |
| B5-2 | | | | 0.3 | 0.3 | | 10 | 115 |
| B5-3 | | | | 0.25 | 0.35 | | 50 | 100 |
| A6-1 | 0.5 | 0.8 | 0.2 | 0.55 | 0.05 | Negative | 0 | 120 |
| A6-2 | | | | 0.3 | 0.3 | | 0 | 115 |
| A6-3 | | | | 0.25 | 0.35 | | 10 | 100 |
| A7-1 | 3.0 | 0.8 | 0.2 | 0.55 | 0.05 | Negative | 0 | 120 |
| A7-2 | | | | 0.3 | 0.3 | | 0 | 115 |
| A7-3 | | | | 0.25 | 0.35 | | 10 | 100 |
| B6-1 | 3.5 | 0.8 | 0.2 | 0.55 | 0.05 | Negative | 10 | 120 |
| B6-2 | | | | 0.3 | 0.3 | | 10 | 115 |
| B6-3 | | | | 0.25 | 0.35 | | 50 | 100 |

**[Table 4]**

| | Difference D (mm) | Separator | | | | | Separator breakage occurrence rate (%) | PSOC life performance (%) |
|---|---|---|---|---|---|---|---|---|
| | | Total thickness (mm) | Average thickness of base (mm) | Height of first rib (mm) | Height of second rib (mm) | Pole wrapped | | |
| B7-1 | 0.4 | 0.9 | 0.2 | 0.65 | 0.05 | Negative | 0 | 120 |
| B7-2 | | | | 0.5 | 0.2 | | 0 | 120 |
| B7-3 | | | | 0.3 | 0.4 | | 10 | 115 |
| B7-4 | | | | 0.25 | 0.45 | | 50 | 100 |
| A8-1 | 0.5 | 0.9 | 0.2 | 0.65 | 0.05 | Negative | 0 | 120 |
| A8-2 | | | | 0.5 | 0.2 | | 0 | 120 |
| A8-3 | | | | 0.3 | 0.4 | | 0 | 115 |
| A8-4 | | | | 0.25 | 0.45 | | 10 | 100 |
| A9-1 | 3.0 | 0.9 | 0.2 | 0.65 | 0.05 | Negative | 0 | 120 |
| A9-2 | | | | 0.5 | 0.2 | | 0 | 120 |
| A9-3 | | | | 0.3 | 0.4 | | 0 | 115 |
| A9-4 | | | | 0.25 | 0.45 | | 10 | 100 |
| B8-1 | 3.5 | 0.9 | 0.2 | 0.65 | 0.05 | Negative | 0 | 120 |
| B8-2 | | | | 0.5 | 0.2 | | 0 | 120 |
| B8-3 | | | | 0.3 | 0.4 | | 10 | 115 |
| B8-4 | | | | 0.25 | 0.45 | | 50 | 100 |

**[Table 5]**

| | Difference D (mm) | Separator | | | | | Separator breakage occurrence rate (%) | PSOC life performance (%) |
|---|---|---|---|---|---|---|---|---|
| | | Total thickness (mm) | Average thickness of base (mm) | Height of first rib (mm) | Height of second rib (mm) | Pole wrapped | | |
| B9-1 | 0.4 | 0.7 | 0.2 | 0.45 | 0.05 | Positive | 20 | 125 |
| B9-2 | | | | 0.3 | 0.2 | | 20 | 125 |
| B9-3 | | | | 0.25 | 0.25 | | 80 | 105 |
| A10-1 | 0.5 | 0.7 | 0.2 | 0.45 | 0.05 | Positive | 0 | 125 |
| A10-2 | | | | 0.3 | 0.2 | | 0 | 125 |
| A10-3 | | | | 0.25 | 0.25 | | 20 | 105 |
| A11-1 | 3.0 | 0.7 | 0.2 | 0.45 | 0.05 | Positive | 0 | 125 |
| A11-2 | | | | 0.3 | 0.2 | | 0 | 125 |
| A11-3 | | | | 0.25 | 0.25 | | 20 | 105 |
| B10-1 | 3.5 | 0.7 | 0.2 | 0.45 | 0.05 | Positive | 20 | 125 |
| B10-2 | | | | 0.3 | 0.2 | | 20 | 125 |
| B10-3 | | | | 0.25 | 0.25 | | 80 | 105 |

**[Table 6]**

| | Difference D (mm) | Separator | | | | | Separator breakage occurrence rate (%) | PSOC life performance (%) |
|---|---|---|---|---|---|---|---|---|
| | | Total thickness (mm) | Average thickness of base (mm) | Height of first rib (mm) | Height of second rib (mm) | Pole wrapped | | |
| B11-1 | 0.4 | 0.6 | 0.2 | 0.35 | 0.05 | Positive | 20 | 125 |
| B11-2 | | | | 0.3 | 0.1 | | 20 | 125 |
| B11-3 | | | | 0.25 | 0.15 | | 80 | 105 |
| A12-1 | 0.5 | 0.6 | 0.2 | 0.35 | 0.05 | Positive | 0 | 125 |
| A12-2 | | | | 0.3 | 0.1 | | 0 | 125 |
| A12-3 | | | | 0.25 | 0.15 | | 20 | 105 |
| A13-1 | 3.0 | 0.6 | 0.2 | 0.35 | 0.05 | Positive | 0 | 125 |
| A13-2 | | | | 0.3 | 0.1 | | 0 | 125 |
| A13-3 | | | | 0.25 | 0.15 | | 20 | 105 |
| B12-1 | 3.5 | 0.6 | 0.2 | 0.35 | 0.05 | Positive | 20 | 125 |
| B12-2 | | | | 0.3 | 0.1 | | 20 | 125 |
| B12-3 | | | | 0.25 | 0.15 | | 80 | 105 |

**[Table 7]**

| | Difference D (mm) | Separator | | | | | Separator breakage occurrence rate (%) | PSOC life performance (%) |
|---|---|---|---|---|---|---|---|---|
| | | Total thickness (mm) | Average thickness of base (mm) | Height of first rib (mm) | Height of second rib (mm) | Pole wrapped | | |
| B11-1 | 0.4 | 0.6 | 0.2 | 0.35 | 0.05 | Positive | 20 | 125 |
| B11-2 | | | | 0.3 | 0.1 | | 20 | 125 |
| B11-3 | | | | 0.25 | 0.15 | | 80 | 105 |
| A12-1 | 0.5 | 0.6 | 0.2 | 0.35 | 0.05 | Positive | 0 | 125 |
| A12-2 | | | | 0.3 | 0.1 | | 0 | 125 |
| A12-3 | | | | 0.25 | 0.15 | | 20 | 105 |
| A13-1 | 3.0 | 0.6 | 0.2 | 0.35 | 0.05 | Positive | 0 | 125 |
| A13-2 | | | | 0.3 | 0.1 | | 0 | 125 |
| A13-3 | | | | 0.25 | 0.15 | | 20 | 105 |
| B12-1 | 3.5 | 0.6 | 0.2 | 0.35 | 0.05 | Positive | 20 | 125 |
| B12-2 | | | | 0.3 | 0.1 | | 20 | 125 |
| B12-3 | | | | 0.25 | 0.15 | | 80 | 105 |

As shown in Tables 1 to 7, when the difference D is 0.4 mm or 3.5 mm, the occurrence rate of the separator breakage increases more frequently as compared to the case where the difference D is 0.4 mm <D <3.5 mm. It is conceivable that the occurrence rate of the separator breakage increases in the IS lead-acid batteries B1-1 to B1-3 because, when the difference is less than D, even slight curvature facilitates the contact of the positive electrode plate with the separator, and hence the oxidation degradation of the separator becomes remarkable. It is conceivable that the occurrence rate of the separator breakage increases in the IS lead-acid batteries B2-1 to B2-3 because an increase in the curvature of the positive electrode plate leads to formation of a convex portion at the end of the positive electrode plate, and the positive electrode plate contacts the separator and the oxidation degradation becomes remarkable. In contrast, when 0.4 mm <D <3.5 mm, the separator breakage has been decreased. It is conceivable that this is because in the case of 0.4 mm <D <3.5 mm, the curvature of the positive electrode plate is prevented, so that the oxidation degradation of the separator is prevented.

From the viewpoint of further enhancing the effect of decreasing separator breakage, it is preferable to set the height of the first rib to 0.3 mm or more. From the same viewpoint, it is also preferable to set the height of the second rib to 0.05 mm or more and 0.2 mm or less. Further, when the height of the first rib is 0.3 mm or more, the PSOC life performance is greatly improved as compared to the case where the height is less than 0.3 mm. It is conceivable that this is because the electrolyte solution is easily ensured near the positive electrode plate and the negative electrode plate to increase the diffusivity of the electrolyte solution, thereby preventing the stratification.

From the comparison of Tables 1, 2, 4, and 5 to 7, when the negative electrode plate is stored in the bag-shaped separator, the occurrence rate of the separator breakage is further decreased as compared to the case where the positive electrode plate is stored. It is conceivable that this is because the bag-shaped separator is hardly affected by the curvature of the positive electrode plate. Further, when the positive electrode plate is stored in the bag-shaped separator, the effect of improving the PSOC life performance is enhanced as compared to the case where the negative electrode plate is stored. It is conceivable that this is because the effect of improving the diffusivity of the electrolyte solution on the positive electrode side is easily exhibited.

### INDUSTRIAL APPLICABILITY

The lead-acid battery according to one aspect of the present invention is a flooded-type lead-acid battery and is used as a lead-acid battery for IS that is charged and discharged under PSOC conditions. The lead-acid battery for IS is suitable for an idling stop vehicle.

### DESCRIPTION OF REFERENCE SIGNS

1: lead-acid battery for IS
2: negative electrode plate
3: positive electrode plate
4: separator
5: positive electrode shelf
6: negative electrode shelf
7: positive electrode pole
8: through-connector
9: negative electrode pole
11: electrode group
12: container
13: partition
14: cell chamber
15: lid
16: negative electrode terminal
17: positive electrode terminal
18: vent plug

## Claims

1. A lead-acid battery for idling stop, comprising:
a cell chamber; and
an electrode group and an electrolyte solution stored in the cell chamber,
wherein
the electrode group includes a positive electrode plate, a negative electrode plate, and a separator interposed between the positive electrode plate and the negative electrode plate,
the separator includes a first rib facing the positive electrode plate and a second rib facing the negative electrode plate,
a difference D between an inner dimension of the cell chamber and a thickness of the electrode group is more than 0.4 mm and less than 3.5 mm, and
the inner dimension of the cell chamber is a distance between a pair of inner walls each facing the positive electrode plate or the negative electrode plate in the cell chamber.

2. The lead-acid battery for idling stop according to claim 1, wherein the difference D is 0.5 mm or more and 3.0 mm or less.

3. The lead-acid battery for idling stop according to claim 1 or 2, wherein a height of the first rib is 0.3 mm or more.

4. The lead-acid battery for idling stop according to any one of claims 1 to 3, wherein a height of the second rib is 0.05 mm or more and 0.20 mm or less.

5. The lead-acid battery for idling stop according to any one of claims 1 to 4, wherein the separator has a bag shape and stores the negative electrode plate.

6. The lead-acid battery for idling stop according to any one of claims 1 to 4, wherein the separator has a bag shape and stores the positive electrode plate.
